Europäisches Patentamt

**European Patent Office**

Office européen des brevets

(11) Numéro de publication: **0 023 511**

**B1**

(12) **FASCICULE DE BREVET EUROPEEN**

(45) Date de publication du fascicule du brevet: **13.02.85**

(21) Numéro de dépôt: **80900365.0**

(22) Date de dépôt: **25.01.80**

(86) Numéro de dépôt international:
**PCT/EP80/00003**

(87) Numéro de publication internationale:
**WO 80/01631 07.08.80 Gazette 80/18**

(51) Int. Cl.⁴: **H 04 B 1/034, H 04 B 7/185**

(54) **PROCEDE ET DISPOSITIF POUR DETECTER ET INTERPRETER UN SIGNAL DE DETRESSE.**

(30) Priorité: **06.02.79 BE 193301**

(43) Date de publication de la demande:
**11.02.81 Bulletin 81/06**

(45) Mention de la délivrance du brevet:
**13.02.85 Bulletin 85/07**

(84) Etats contractants désignés:
**DE FR GB SE**

(56) Documents cités:
**BE-A- 873 970**
**FR-A-2 113 907**
**US-A-3 432 755**

**Nachrichtentechnische Zeitschrift, volume 30, No. 5, publié en 1977, (Berlin,DE), "Funk-Notruf über Satelliten", page 364**

**Funkschau, volume 49, No. 1, publié en 1977 (Munich,DE), Marisat et al.: "Schiffsfunk über Satelliten", pages 34 à 36**

(73) Titulaire: **AGENCE SPATIALE EUROPEENNE**
**8-10, rue Mario Nikis**
**F-75738 Paris Cedex 15 (FR)**

(72) Inventeur: **ROGARD, Roger**
**Verdistraat 16**
**2162 AV Lisse (NL)**

(74) Mandataire: **Vanderperre, Robert et al**
**Bureau VANDER HAEGHEN 63 Avenue de la Toison d'Or**
**B-1060 Bruxelles (BE)**

(56) Documents cités:

**NTG-Fachberichte, No. 52, publié en 1975, (Offenbach, DE), Bie Go et al.: "Ein flexibles Konzept für kohärente Transponder", pages 163 à 169**

Courier Press, Leamington Spa, England.

## Description

Domaine Technique

La présente invention se rapporte à un système de télécommunications spécialement destiné à la signalisation efficace et fiable des navires en détresse. Elle concerne plus particulièrement un procédé pour élaborer, détecter et interpréter de façon fiable un signal de détresse composé entre autres d'informations telles que l'identité et la position d'un navire en détresse, ainsi qu'un dispositif pour la mise en oeuvre de ce procédé.

Technique Antérieure

Actuellement, en cas de détresse en mer, on utilise couramment des systèmes de télécommunications par liaisons radio-électriques (HF ou VHF). Ces liaisons sont cependant sujettes à des instabilités de propagation d'ondes qui entachent sérieusement la rapidité d'établissement de ces liaisons et leur efficacité, ce qui rend incertaine l'organisation des secours.

Une amélioration peut déjà être obtenue par l'intermédiaire d'un satellite maritime qui permet d'établir plus rapidement des liaisons téléphoniques ou télex avec des stations côtières. Toutefois, les équipements de télécommunications actuels sont encombrants et onéreux, ce qui limite leur utilisation à des navires d'un certain tonnage, dans des conditions normales d'exploitation. En cas de naufrage, ces équipements ne sont pas à l'abri d'avaries du fait de la situation de détresse du navire (explosion, incendie, par exemple), ce qui rend la situation des naufragés dramatique ou même catastrophique.

Dans ces conditions, il s'avère nécessaire de disposer d'un système de télécommunications spécialement destiné aux messages de détresse de navires, qui soit d'une efficacité et d'une fiabilité éprouvées dans les conditions les plus imprévues et qui ne nécessite qu'un équipement terminal de navire simple, moins encombrant et moins onéreux qu'un équipement terminal de télécommunications classique.

Pour répondre aux impératifs de sécurité voulus pour les liaisons de détresse, il faut d'abord de préférence que les stations mobiles soient autonomes, c'est-à-dire non incorporées dans les installations des navires et qu'elles soient d'un équipement simple. Il faut ensuite que la transmission soit organisée pour assurer une sécurité et une efficacité élevées et que les dispositifs de réception de stations côtières soient capables de répondre à des signaux de détresse de très faibles niveaux et fortement entachés de parasites, ce qui permet d'établir les liaisons entre les postes mobiles et les stations côtières avec éventuellement relais par un satellite de communications maritimes.

On connaît (FR—A—2113907) un manipulateur automatique de signaux de détresse agencé pour délivrer un signal continu cyclique composé d'un premier intervalle de temps dependant lequel est transmis un signal de détresse international et d'un second intervalle de temps pendant lequel est transmis un message concernant l'identité et la position du navire en détresse. Dans ce dispositif le signal délivré est produit par trois sources de signaux distinctes couplées en séquence à un circuit émetteur. A la réception d'un tel signal composite il n'est malheureusement pas possible d'extraire le message d'une manière fiable.

Exposé de L'invention

L'invention résout le problème par un procédé de télécommunications et un dispositif de réception qui permettent de satisfaire aux impératifs de sécurité et de fiabilité exposés plus haut.

L'invention a pour objet un procédé de télécommunications spécialement conu pour l'élaboration et la transmission de signaux de détresse à partir de stations mobiles à équipement simple, et pour la détection et l'interprétation précises et fiables de ces signaux aux stations de surveillance côtière.

L'invention a également pour objet un dispositif de réception de signaux de détresse organisé spécialement pour détecter et traiter des signaux de détresse de niveaux très faibles et fortement entachés de parasites, avec une probabilité et une précision très élevées, même dans les conditions de détresse les plus imprévues.

Le procédé de télécommunications de détresse suivant l'invention est organisé pour transmettre des signaux de détresse de façon répétée en séquences successives composées chacune de deux parties de durées prédéterminées: un intervalle de détection pendant lequel est transmis un signal d'alarme et un intervalle de transmission de message pendant lequel est transmis le message de détresse proprement dit indiquant notamment l'identité du bateau en détresse, sa position et le type de détresse. Pendant l'intervalle de détection, le signal transmis est constitué d'une porteuse modulée en phase par une sousporteuse, la fréquence de celle-ci étant un multiple de la vitesse de transmission de l'information. Pendant l'intervalle de transmission de message, l'information est superposée à la sous-porteuse par modulation binaire de phase. La présence d'un signal d'alarme pendant chaque intervalle de détection est détectée pour produire un signal de commande indiquant la présence d'un signal de détresse. En réponse à ce signal de commande, le signal de message reçu pendant l'intervalle de transmission de message subséquent est démodulé et interprété de façon cohérente afin de restituer le message de détresse.

Le dispositif de réception comprend un récepteur d'alarme organisé pour surveiller la bande de fréquences de réception simultanément dans plusieurs canaux de largeurs de bandes étroites distinctes et pour produire un signal de détection en réponse à la détection d'un signal d'alarme dans l'un quelconque desdits canaux pendant l'intervalle de détection d'alarme; un dispositif de logique de transfert organisé pour produire un signal de commande en réponse à la génération d'un signal de détection; et un récepteur de message organisé pour répondre audit signal de commande et traiter le signal de détresse reUu pendant l'intervalle de transmission de message afin de restituer ce message par démodulation de phase cohérente.

Le récepteur de message comprend un dispositif de contrôle organisé pour déterminer de façon précise la fréquence porteuse du signal reçu et contrôler la qualité en amplitude de ce signal afin de compenser les instabilités de fréquence et de phase, et pour autoriser ensuite l'extraction du message dans des circuits de démodulation de phase classiques qui produisent un train de bits représentant le message de détresse. Le récepteur de message comprend encore un corrélateur pour synchroniser le message et un dispositif intégrateur pour intégrer les messages reus au cours des phases de transmission de message successives. Le message de détresse ayant été parfaitement traité en sorte de lever toutes les ambiguïtés résultant de la démodulation, il se trouve décodé dans un décodeur de caractères classique.

Grâce à leurs performances et à leur précision de détection et d'interprétation élevée, le procédé et le dispositif suivant l'invention peuvent être utilisés avec un satellite de communications maritimes, type MARECS par exemple, pour relayer les signaux de détresse émis par les stations mobiles.

Description Sommaire des Dessins

Les dessins joints illustrent schématiquement un exemple de mode de réalisation du système de télécommunications suivant l'invention.

— la figure 1 est un diagramme montrant la séquence de transmission des signaux de détresse;

— les figures 2 et 3 sont des diagrammes de fréquences illustrant les signaux d'alarme et de message;

— la figure 4 est un schéma simplifié des circuits de réception de station côtière suivant l'invention;

— la figure 5 est un schéma fonctionnel du circuit du récepteur d'alarme;

— la figure 6 est un schéma fonctionnel du circuit du récepteur de message.

Description d'un Mode de Réalisation de l'Invention

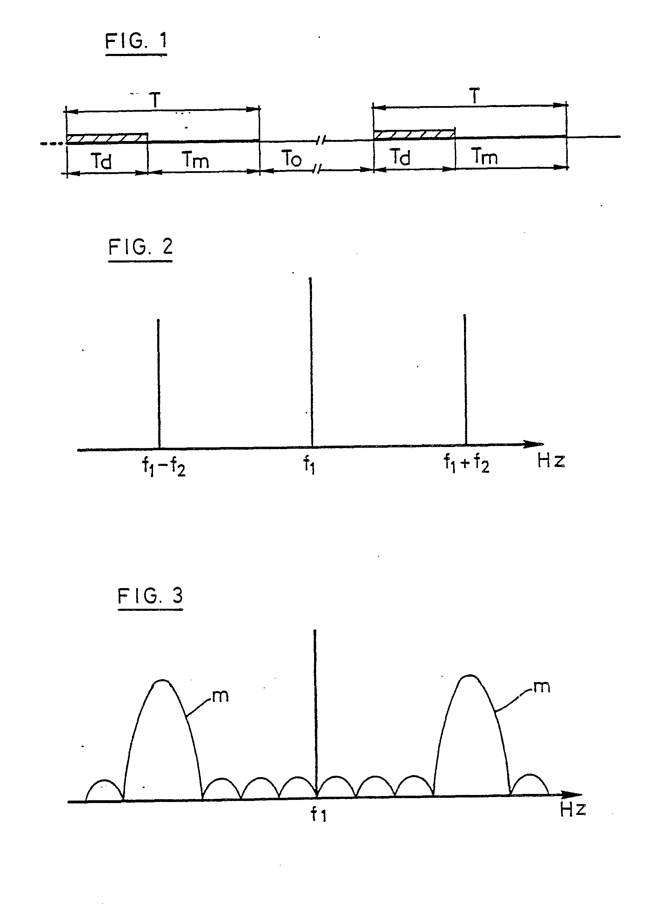

Pour atteindre le résultat recherché par l'invention sur le plan de la sécurité et de la fiabilité de détection et d'interprétation des signaux de détresse, les signaux sont transmis de façon répétée pendant une durée suffisamment longue pour permettre à une station côtière de détecter ces signaux avec une probabilité et une certitude élevées. Les signaux de détresse sont constitués de séquences qui se succèdent à la intervalles réguliers. Comme le montre le diagramme de la figure 1, chaque séquence T se compose de deux parties: un intervalle de détection d'alarme Td et un intervalle de transmission de message Tm. L'intervalle de détection d'alarme a par exemple une durée de 8 secondes et l'intervalle de transmission de message, une durée de 12 secondes par exemple. Les séquences T successives sont avantageusement séparées par un intervalle de repos To. Pendant l'intervalle de détection d'alarme, le signal est constitué d'une porteuse $f_1$ modulée en phase par une sous-porteuse $f_2$ (appelée signal d'alarme) avec un indice de modulation faible (m = 1,2 par exemple). Le signal se compose alors de trois raies (la porteuse et les deux raies latérales de la sous-porteuse) comme montré au diagramme de la figure 2. Ce signal constitue un signal d'alarme qui sera détecté à la réception.

Pendant l'intervalle de transmission, le message de détresse se trouve superposé à la sous-porteuse $f_2$ par modulation binaire de phase. La sous-porteuse a une fréquence faible, 240 Hz par exemple. Le message, qui indique notamment l'identification du bateau, sa position et le type de détresse, est composé de plusieurs caractères issus chacun d'un code binaire à trente-deux éléments par exemple. Le signal de message transmis pendant le second intervalle Tm est illustré au diagramme de la figure 3. Ce signal se compose de la raie de la porteuse $f_1$ et du spectre de modulation $m$ de la sous-porteuse, support de l'information.

Les circuits de modulation utilisés sont des circuits de modulation de phase classiques qui n'appellent aucune description particulière ici. Ces circuits sont relativement simples de sorte que les stations mobiles sont peu encombrantes et peu onéreuses; elles peuvent donc équiper des navires de n'importe quel tonnage. Pour des raisons de sécurité, comme dit précédemment, ces stations mobiles sont de préférence installées sur des bouées autonomes.

En ce qui concerne les caractéristiques des signaux de détresse, on notera que les niveau de ces signaux peuvent être très faibles, notablement plus faibles que le niveau nominal des voies téléphoniques normales, en particulier lorsque les signaux émis par une station mobile sont relayés par satellite de communications. De plus, ces signaux sont entachés de signaux parasites essentiellement générés dans le satellite, dont le niveau peut être du même ordre de grandeur que celui des signaux de détresse eux-mêmes, ainsi que de bruits de phase générés dans la chaîne de transmission. D'autre part, les signaux transmis sont sujets à des instabilités de fréquence dues notamment à l'émetteur de bouée et au mouvement erratique de celle-ci, au gré des vagues, donnant lieu à un certain effet doppler non négligeable vis à vis des largeurs de bandes de fréquences des circuits de réception. Compte tenu de ces caractéristiques des signaux de détresse, il est impératif pour la fiabilité du système, que toutes les variations de fréquence qui se produisent au cours de la transmission soient prises en considération à la réception des signaux aux stations côtières et que les signaux parasites ne produisent pas de fausses alarmes. Les circuits de réception aux stations côtières sont donc spécialement organisés suivant l'invention pour détecter la présence d'un signal d'alarme pendant l'intervalle de détection Td et pour interpréter le signal de message dans chaque séquence de transmission, avec une fiabilité élevée en tenant compte des caractéristiques particulières des signaux brièvement décrites plus haut.

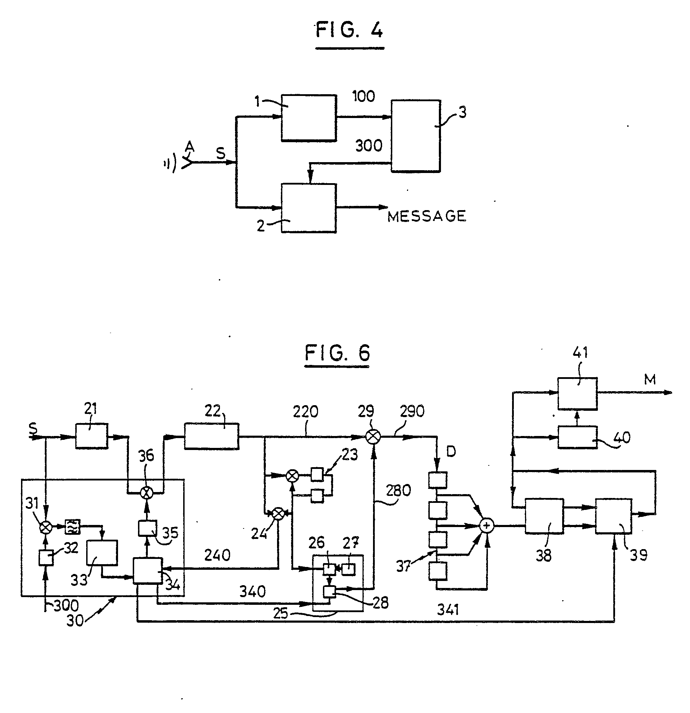

L'organisation des circuits de réception de station côtière suivant l'invention est décrite ci-après avec référence aux figures 4 à 6. Comme le montre la figure 4, le dispositif de réception comprend un récepteur d'alarme 1, un récepteur de message 2 et un dispositif de logique de transfert 3. La référence A désigne une antenne de réception à laquelle sont connectés les récepteurs 1 et 2.

Le récepteur d'alarme 1 surveille la plage de féquences de réception simultanément dans un ensemble de canaux étroits distincts, pendant chaque intervalle de détection, afin de détecter la présence éventuelle d'un signal d'alarme dans un des canaux. Si un signal de détresse S est capté par l'antenne A, le récepteur 1 produit un signal de détection 100. En réponse à ce signal de détection, le dispositif de logique de transfert 2 produit un signal de commande 300 pour le récepteur de message 2, ce signal de commande 300 identifiant le canal dans lequel a été détecté le signal de détresse. L'organisation du dispositif de logique 3 relève de la compétence normale de l'homme de l'art. Le récepteur de message 2 est organisé pour traiter le signal de détresse pendant les intervalles de transmission de message Tm des séquences T successives après qu'il a reçu le signal de commande 300. L'organisation du récepteur de message 2 es spécialement conçue pour contrôler de façon précise le signal de détresse avant de le démoduler de manière cohérente comme on le verra plus loin.

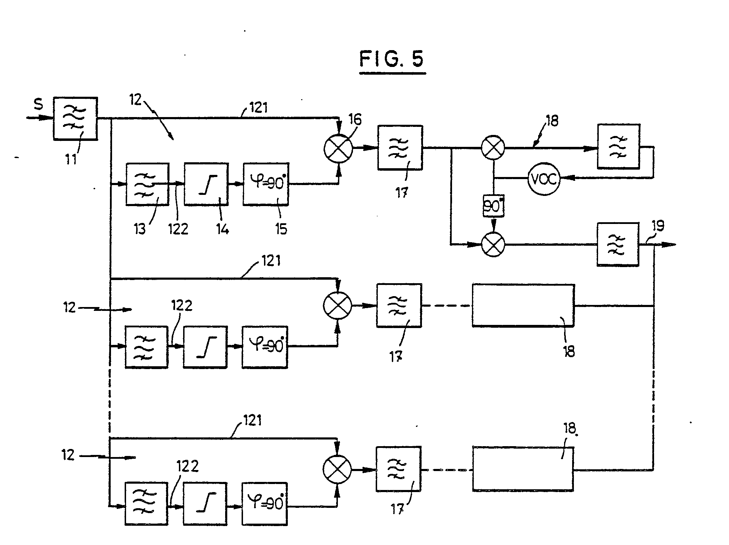

L'organisation du récepteur d'alarme 1 est illustrée à la figure 5. Le filtre 11 est un filtre passe-bande ayant pour fonction, connue en soi, de délimiter la largeur de la plage de fréquences de réception. Le récepteur comprend plusieurs circuits de détection connectés en parallèle, chacun de ces circuits étant affecté à la surveillance d'un canal étroit distinct dans la plage de fréquences de réception. Chaque circuit de détection a pour fonction de recouvrer la fréquence porteuse $f_1$ et de détecter la présence de la sous-porteuse $f_2$ avec une certitude élevée. Dans chaque circuit de détection le signal de détresse S est appliqué à un circuit de recouvrement de porteuse 12 comprenant deux voies: une voie directe 121 dans laquelle le signal S ne subit aucun traitement et une voie de déphasage 122. Le filtre 13 est un filtre à bande étroite qui délimite la largeur d'un canal. Les filtres 13 de tous les circuits de détection ont la même largeur de bande mais leurs bandes de fréquences sont centrées sur des fréquences décalées les unes par rapport aux autres. Avantageusement, on choisit pour ces canaux, des bandes de fréquences qui si recouvrent. La largeur de ces bandes est choisie suffisamment étroite pour limiter les pertes de démodulation, mais cependant la plus large possible pour réduire le nombre des circuits de détection à connecter en parallèle. Un ordre de grandeur jugé satisfaisant pour la largeur de bande est par exemple de 50 Hz. A part cela, les voies à déphasage de tous les circuits 12 sont similaires. Le dispositif 14 est un circuit limiteur destiné à réduire le bruit d'amplitude, le dispositif 15 est un circuit déphaseur de $\pi/2$, tous ces dispositifs étant connus en soi. Le signal direct de la voie 121 et le signal déphasé de la voie 122 sont combinés dans un circuit multiplieur 16, connu en soi, de telle sorte qu'à la sortie de celui-ci apparaisse la sous-porteuse $f_2$. Le filtre 17 sélectionne la fréquence nominale de la sous-porteuse; ce filtre a une bande étroite, par exemple 3 Hz. Le circuit 18 est un circuit de détection cohérente constitué d'une boucle d'asservissement de phase classique qui détecte la présence de la fréquence sous-porteuse $f_2$ dans le canal respectif, c'est-à-dire la fréquence d'un signal d'alarme, et produit un signal de commande lorsqu'un signal d'alarme est présent. Ainsi donc, lorsque le récepteur d'alarme 1 détecte la présence d'un signal d'alarme dans un canal quelconque de la bande de fréquences surveillée, pendant un intervalle de détection Td de la séquence de transmission, un signal de détection 100 apparaît sur la ligne 19 aboutissant au dispositif de commande de transfert 3 (voir figure 4). L'organisation des circuits de détection 12—17—18 décrite plus haut permet de réduire les pertes de détection et le nombre de fausses alarmes dues à des signaux parasites. Pour que ceux-ci puissent produire une alarme, il faut pratiquement une composition de deux signaux parasites dont l'écart de fréquence est exactement égal à la fréquence de la sous-porteuse. Cette condition est jugée suffisamment contraignante pour assurer une protection efficace et, partant, une fiabilité de détection satisfaisante.

Lorsqu'un signal d'alarme est détecté pendant un intervalle de détection d'alarme Td, le récepteur de message 2 se trouve rendu opérationnel afin de traiter le signal de détresse pendant l'intervalle de transmission de message Tm subséquent et restituer ce message. La mise en oeuvre du récepteur de message nécessite la connaissance du numéro du canal dans lequel est détecté le signal de détresse. C'est le signal de commande 300, comme indiqué plus haut, qui identifie ce numéro de canal. Le dispositif de logique de transfert 3 (figure 4) est organisé pour produire ledit signal de commande 300.

Le récepteur de message 2 est organisé pour traiter le signal de détresse S dans le canal identifié, de la manière la plus cohérente possible. Comme on l'a vu plus haut, pendant l'intervalle de détection d'alarme a été déterminée la fréquence porteuse avec une certitude égale à la largeur de la bande des filtres 13. Compre tenu de cette largeur de bande qui, rappelons-le, est par exemple de l'ordre de 50 Hz, le récepteur de message doit être organisé pour réduire les pertes de démodulation lors de la démodulation du signal de détresse. Avant de procéder à cette démodulation, le récepteur 2 suivant l'invention effectue un contrôle très précis de la fréquence porteuse $f_1$ afin de la maintenir au centre d'une bande étroite, de l'ordre de 5 Hz par exemple.

L'organisation du récepteur de message 2 est illustrée schématiquement à la figure 6. Le dispositif 21 est un dispositif de retard, connu en soi, qui retarde le signal de détresse S afin d'en différer la démodulation pendant le temps nécessaire au processus de contrôle de fréquence ci-dessus mentionné. Le circuit 22 est un démodulateur de phase similaire au circuit 12 du récepteur d'alarme mais contenant un filtre à bande de fréquences plus étroite dans la branche de déphasage, par exemple un filtre ayant une largeur de bande de 5 Hz. A la sortie du circuit 22 on trouve la sous-porteuse $f_2$ pendant l'intervalle de détection d'alarme et la sous-porteuse modulée par le message pendant l'intervalle de transmission Tm. Le dispositif 23 est une boucle de phase classique qui détecte la sous-porteuse $f_2$ pendant les intervalles de détection d'alarme. Le multiplieur 24 multiplie le signal de sortie du démodulateur de phase 22 avec la sous-porteuse produite par la boucle 23 et produit un signal 240 représentant la présence d'une sous-porteuse non modulée.

Le dispositif 30 est le dispositif de contrôle organisé pour procéder aux contrôles de fréquence et de qualité de signal mentionnés précédemment. Le signal de détresse S reçu est d'abord multiplié dans le multiplieur 31 avec un signal de référence 32 ajusté par le signal de commande 300 du dispositif de logique 3 (figure 4) pendant l'intervalle de détection d'alarme. La sortie du multiplieur 31 est analysée dans un dispositif d'analyse 33 organisé pour déterminer les composantes spectrales du signal de détresse reçu et produire un signal représentant la fréquence de la porteuse. Un contrôleur 34, qui consiste en une organisation de logique, a pour fonction de commander la génération par le générateur 35, d'un signal ayant un écart de fréquence déterminé par rapport à la porteuse en réponse au signal 240 précité qui indique la présence de la sous-porteuse $f_2$. Le multiplieur 36 multiplie la sortie du dispositif de retard 21 avec la sortie du générateur 35. Dés qu'il reçoit le signal 240 qui, en fait, indique la présence d'un message, le contrôleur 34 génère un signal d'autorisation 340 servant à autoriser la restitution de la sous-porteuse avec sa phase correcte en vue de l'extraction cohérente du message. Le contrôleur 34 génère encore un signal 341 représentant la qualité en amplitude du signal S reçu, c'est-à-dire un signal représentant l'amplitude du rapport signal/bruit du signal S. Le rôle de ce signal 341 sera décrit plus loin.

La phase de la sous-porteuse $f_2$ produite par la boucle de phase 23 est réglée dans un dispositif de réglage 25 comprenant un comparateur 26 pour comparer la sous-porteuse avec le signal d'une horloge interne 27, et un déphaseur 28 qui, en réponse à la génération du signal d'autorisation 340 précité, produit sur la ligne 280 la sous-porteuse avec sa phase correcte. La sous-porteuse étant correctement restituée, le signal de détresse reçu peut alors être démodulé.

Le circuit de démodulation comprend essentiellement le multiplieur 29 connecté pour multiplier la sous-porteuse modulée, présente sur la ligne 220 à la sortie du démodulateur de phase 22, ave la sous-porteuse $f_2$ restituée sur la ligne 280, ce qui assure l'extraction cohérente du message de détresse qui apparaît sur la ligne 290 sous forme d'un train de données binaires D.

Le dispositif 37 est un intégrateur qui intègre le train de données D pendant la durée d'un bit. Comme la fréquence bit est dérivé de l'horloge interne par division de fréquence, il y a ambiguïté sur la phase de cette intégration. A ce stade l'ambiguïté n'est pas levée. On traite par la suite les quatre signaux possibles. Le dispositif 38 est un corrélateur, dispositif bien connu en soi, et le dispositif 39 est un intégrateur de message. Le corrélateur 38 a pour fonction de mettre les messages en phase avec la sortie de l'intégrateur 39. Celui-ci superpose le message contenu dans la séquence de transmission au message intégré au cours des séquences de transmission précédentes de manière à effectuer une somme pondérée réglée par le signal de qualité 341 généré par le contrôleur 34. Dès que la qualité de l'ensemble du message est suffisante, un dispositif de synchronisation de bit 40 lève l'ambiguïté sur la synchronisation de bit, ce qui permet au détecteur de caractères 41 de décoder le message afin de restituer le message intelligible M.

Possibilités d'Exploitation Industrielle

Etant donnée la précision élevée de la détection et de l'interprétation des signaux de détresse par le procédé et le dispositif suivant l'invention et étant données les performances ainsi obtenues, l'invention permet d'établir des liaisons de télécommunications de détresse avec relais par satellite de communication maritimes, par exemple un satellite MARECS. Dans ce cas, les signaux sont transmis dans une plage de fréquences de 0,5 MHz réservée dans le plan des fréquences alloué aux liaisons par satellite, à une vitesse de transmission faible, par exemple 60 bauds. Un tel système de télécommunications par satellite permet une excellente couverture des océans et mers avec des équipements de télécommunications relativement simples.

**Revendications**

1. Procédé de télécommunications de détresse pour élaborer un signal de détresse émis par une station mobile de façon répétée en séquences successives et pour détecter et interpréter avec une grande fiabilité ce signal de détresse à une station côtière, chaque séquence du signal de détresse étant composée d'un premier intervalle de temps (Td) pendant lequel est transmis un signal d'alarme et d'un second intervalle de temps (Tm) pendant lequel sont transmises les informations concernant l'identité et la position du navire en détresse, caractérisé en ce que le signal d'alarme transmis pendant le premier intervalle de temps (Td) est constitué uniquement d'une porteuse modulée en phase par une sous-porteuse, en ce que le signal de message transmis pendant le second intervalle de temps (Tm) est constitué de la porteuse modulée en phase par la sous-porteuse sur laquelle les informations sont superposées par modulation binaire de phase, en ce que le signal d'alarme est détecté pendant le premier intervalle de temps (Td) pour produire un signal de commande (300) indiquant la présence d'un signal de détresse, et en ce que le signal de message reçu pendant le second intervalle de temps (Tm) est contrôlé et interprété en réponse audit signal de commande afin de restituer le message de détresse.

2. Dispositif de réception de signaux de détresse transmis suivant le procédé selon la revendication 1, caractérisé en ce qu'il comprend un récepteur d'alarme (1) organisé pour surveiller une bande de fréquences de réception simultanément dans plusieurs canaux de largeurs de bandes étroites distinctes et pour produire un signal de détection (100) en réponse à la détection d'un signal d'alarme dans l'un quelconque desdits canaux pendant le premier intervalle de temps (Td), un dispositif de logique de transfert (3) organisé pour répondre au signal de détection afin de produire un signal de commande (300) qui identifie le canal dans lequel est détecté le signal d'alarme, et un récepteur de message (2) connecté pour recevoir le signal de détresse (S) et organisé pour répondre audit signal de commande et contrôler puis traiter le signal de message reçu pendant le second intervalle de temps (Tm) afin de restituer le message de détresse.

3. Dispositif selon la revendication 2, caractérisé en ce que le récepteur d'alarme comprend plusieurs circuits de détection organisés chacun pour détecter la présence d'un signal d'alarme dans un canal distinct de largeur de bande étroite, chaque circuit de détection comprenant, en série, un circuit de recouvrement de porteuse (12), un filtre de sélection de sous-porteuse (17) et un circuit de détection à boucle de phase (18), ce dernier circuit produisant ledit signal de détection en réponse à la détection d'un signal d'alarme.

4. Dispositif selon la revendication 2, caractérisé en ce que le récepteur de message comprend un dispositif de retard (21) connecté pour recevoir le signal de détresse et le retarder d'un intervalle de temps prédéterminé;
un premier circuit démodulateur de phase (22) connecté à la sortie du dispositif de retard pour démoduler le signal reçu et restituer la sous-porteuse modulée;
un dispositif de détection (23) connecté à la sortie du démodulateur de phase et organisé pour détecter la sous-porteuse et produire un signal de détection (240) en réponse à la présence de la sous-porteuse;
un dispositif de contrôle (30) connecté entre l'entrée et la sortie du dispositif de retard, ce dispositif de contrôle comprenant un moyen (33) pour analyser le spectre de fréquence du signal de détresse reçu et générer un signal représentant la fréquence de la porteuse, un moyen de logique (34) répondant audit signal de détection de sous-porteuse (240) et organisé pour produire un signal de commande dépendant de la sortie du moyen d'analyse, ledit moyen de logique étant en outre organisé pour produire un signal d'autorisation (340) en réponse au dit signal de détection de sous-porteuse (240) et un signal (341) représentant la qualité en amplitude du signal de détresse;
un générateur de fréquence à tension commandée (35) répondant audit signal de commande afin d'engendrer un signal ayant un écart de fréquence déterminé par rapport à la porteuse, et un multiplieur (36) connecté pour multiplier la sortie du dispositif de retard (21) avec le signal de sortie du générateur de fréquence (35);
un dispositif de réglage de phase (25) connecté pour répondre audit signal d'autorisation (340) et régler la phase de la sous-porteuse restituée dans le dispositif de détection (23); et
un second circuit démodulateur de phase (29) pour démoduler la sortie du premier circuit démodulateur de phase avec la sous-porteuse restituée afin d'extraire le train de bits de message.

5. Dispositif selon la revendication 4, caractérisé en ce que le récepteur de message comprend en outre, connectés en série, un corrélateur (38) et un intégrateur de message (39), le corrélateur étant connecté pour corréler le phase du message extrait au cours d'une séquence de transmission avec la phase du message intégré dans ledit intégrateur de message au cours des séquences de transmission précédentes.

**Patentansprüche**

1. Verfahren zum Erfassen eines von einer beweglichen Sendestation wiederholt in aufeinanderfolgenden Sendeabschnitten ausgestrahlten Notsignals und zur Feststellung und Auswertung desselben mit grosser Zuverlässigkeit in einer Küstenstation, wobei jeder Sendeabschnitt des Notsignals sich aus einem ersten Zeitintervall (Td) zusammensetzt, während welchem ein Alarmsignal übermittels wird, und aus einem zweiten Zeitintervall (Tm), während welchem die Daten übertragen werden, welche die Identität und die Position des in Seenot befindlichen Schiffes betreffen, dadurch gekennzeichnet, dass das während des ersten Zeitintervalls (Td) übertragene Alarmsignal allein aus einem mit einem Hilfsträger phasenmoduliertem Träger besteht, dass das während des zweiten Zeitintervalls (Tm) übertragene Notrufsignal aus dem mit dem Hilfsträger phasenmodulierten Träger besteht, auf welchem die Daten durch binäre Phasenmodulation überlagert sind, dass das Alarmsignal während des ersten Zeitintervalls (Td) demoduliert wird, um ein Steuersignal (300) zu erzeugen, welches die Anwesenheit eines Notrufsignals anzeigt, und dass das während des zweiten Zeitintervalls (Tm) empfangene Notrufsignal abhängig von diesem Steuersignal gesteuert und interpretiert wird, damit der Notrufinhalt wiedergewonnen wird.

2. Vorrichtung zum Empfang von nach dem Verfahren gemäss Anspruch 1 gesendeten Notsignalen, gekennzeichnet durch einen Alarmsignalempfänger (1), der zur gleichzeitigen Überwachung eines Bandes von Empfangsfrequenzen auf mehreren Kanälen mit engen, abgegrenzten Bandbreiten ausgestaltet ist, sowie zur Erzeugung eines Feststellungssignals (100), abhängig von der Feststellung eines Alarmsignals in irgendeinem der genannten Kanäle während des ersten Zeitintervalls (Td), eine Übertragungslogik (3), die zum Ansprechen auf das Feststellungssignal ausgestaltet ist, um eine Steuersignal (300) zu erzeugen, welches den Kanal identifiziert, in welchem das Alarmsignal ermittelt wurde, sowie einen Notrufsignalempfänger (2), der zum Empfang des Notrufsignals (S) angeschlossen und so ausgestaltet ist, dass er auf das Steuersignal anspricht und das Signal des während des zweiten Zeitintervalls (Tm) aufgenommenen Notrufs überwacht und verarbeitet, um den Notrufinhalt wiederzugewinnen.

3. Vorrichtung nach Anspruch 2, dadurch gekennzeichnet, dass der Alarmsignalempfänger mehrere Ermittlungsschaltungen enthält, wovon jede zur Feststellung der Anwesenheit eines Alarmsignals in einem begrenzten Kanal mit enger Bandbreite ausgebildet ist und jede Ermittlungsschaltung in Reihe eine Trägerwiedergewinnungsschaltung (12), ein Selektrionsfilter (17) für den Hilfsträger und eine Ermittlungsschaltung mit Phasenschleife (18) aufweist, wobei die letztgenannte Schaltung das Ermittlungssignal abhängig von der Feststellung eines Alarmsignals erzeugt.

4. Vorrichtung nach Anspruch 2, dadurch gekennzeichnet, dass der Notrufsignalempfänger eine Verzögerungseinrichtung (21) aufweist, die zum Empfang des Notrufsignals geschaltet ist und dieses um ein vorgegebenes Zeitintervall verzögert, dass eine erste Phasendemodulatorschaltung (22) mit dem Ausgang der Verzögerungseinrichtung verbunden ist, um das empfangene Signal zu demodulieren und den modulierten Hilfsträger wiederzugewinnen, dass eine Detektoranordnung (23) am Ausgang des Phasendemodulators angeschlossen und so aufgebaut ist, um den Hilfsträger zu ermitteln und ein Ermittlungssignal (240), abhängig von der Anwesenheit des Hilfsträgers, zu erzeugen, dass eine Steuervorrichtung zwischen dem Eingang und Ausgang der Verzögerungseinrichtung angeordnet ist, und diese Steuervorrichtung eine Einrichtung (33) zur Analyse des Frequenzspektrums des empfangenen Notrufsignals und zur Erzeugung eines Signals aufwesit, welches die Trägerfrequenz darstellt, dass eine Logikschaltung (34) auf das den Hilfsträger betreffende Ermittlungssignal (240) anspricht und so aufgebaut ist, um eine vom Ausgang der Analyseeinrichtung abhängiges Steuersignal zu erzeugen, wobei die Logikschaltung ferner derart aufgebaut ist, dass abhängig vom Hilfsträger-Ermittlungssignal (240) ein Freigabesignal (340) sowie ein Signal (341) erzeugt wird, welches die Qualität des Notrufsignals bezüglich seiner Amplitude darstellt, dass ein spannungsgesteuerter Frequenzgenerator (35) auf das Steuersignal anspricht, um eine Signal zu liefern, welches in bezug auf die Trägerfrequenz einen vorgegebenen Frequenzabstand aufweist, und dass eine Multiplikator (36) so angeschlossen ist, dass er das Ausgangssignal der Verzögerungseinrichtung (21) mit dem Ausgangssignal des Frequenzgenerators (35) multipliziert, dass eine Phasenregleranordnung (25) derart geschaltet ist, dass sie auf das Freigabesignal (340) anspricht und die Phase des in der Detektoranordnung (23) wiedergewonnenen Hilfsträgers reguliert, und dass eine zweite Phasendemodulatorschaltung (29) vorgesehen ist, um das Ausgangssignal der ersten Demodulatorschaltung mit dem wiedergewonnenen Hilfsträger zu demodulieren, um die Bitfolge des Notrufs zu gewinnen.

5. Vorrichtung nach Anspruch 4, dadurch gekennzeichnet, dass der Notrufempfänger ferner einen in Serie geschalteten Korrelator (38) und einen Notruf-Integrator (39) aufweist, wobei der Korrelator derart angeschlossen ist, dass er die Phase des im Laufe einer Sendesignalfolge entnommenen Notrufs mit der Phase des Notrufs korreliert, welcher im Notruf-Integrator im Laufe der vorausgehenden Übertragungssignalfolge integriert wurde.

## Claims

1. An emergency telecommunication process for producing a distress signal repeatedly transmitted from a mobile station in successive sequences and for detecting and interpreting the distress signal with a high reliability at a shore terminal, each sequence of the distress signal being comprised of a first time interval (Td) during which an alarm signal is transmitted and a second time interval (Tm) during which are transmitted the information relating to the identity and the location of the ship in emergency condition, characterized in that the alarm signal during the first time interval (Td) is only comprised of a carrier phase-modulated by a sub-carrier, in that the message signal during the second time interval (Tm) is comprised of the carrier phase-modulated by the sub-carrier to which the information is superimposed by binary phase modulation, in that the alarm signal is detected during the first time interval (Td) for producing a command signal (300) indicating the occurrence of a distress signal, and in that the message signal received during the second time interval (Tm) is controlled and interpreted in response to said command signal so as to restore the distress message.

2. A receive apparatus for distress signals transmitted according to the process of claim 1, characterized by an alarm receiver (1) arranged for monitoring a receive frequency band simultaneously in a plurality of channels each having a distinct narrow bandwidth and for producing a detect signal (100) in response to an alarm signal being detected in any of said channels during the first time interval (Td), transfer logic means (3) arranged to respond to the detect signal for producing a command signal (300) which identifies the channel in which the alarm signal is detected; and a message receiver (2) connected for accepting the distress signal (S) and arranged for responding to said command signal and for controlling and thereafter processing the message signal received during the second time interval (Tm) so as to restore the distress message.

3. A receive apparatus according to claim 2, characterized in that the alarm receiver comprises a plurality of detection circuits each arranged to detect the presence of an alarm signal in a respective channel having a narrow bandwidth, each detection circuit comprising, connected in series, a carrier restore circuit (12), a sub-carrier select (17) and a phase loop detection circuit (18), the filter circuit being arranged to produce said detect signal in response to an alarm signal being detected.

4. A receive apparatus according to claim 2, characterized in that the message receiver comprises a delay device (21) connected to accept the distress signal and to delay it by a predetermined time interval; a first phase demodulator (22) connected to the output of the delay device for demodulating the received signal and restoring the modulated sub-carrier;

a detection device (23) connected to the output of the phase demodulator and arranged to detect the sub-carrier and produce a detect signal (240) in response to the occurrence of said sub-carrier;

a control device (30) connected between the input and the output of the delay device, said control device comprising means (33) for analyzing the frequency spectrum of the received distress signal and generating a signal representing the carrier frequency, logic means (34) responsive to said detect signal (240) and arranged to produce a command signal which depends on the output from the analyzing means, said logic means being further arranged to produce an enable signal (340) in response to said detect signal (240) and a signal (341) representing the amplitude quality of the distress signal, a controlled-voltage frequency generator (35) responsive to said command signal to generate a signal having a determined frequency deviation relative to the carrier, and a multiplier (36) connected to multiply the output from the delay device (21) with the output signal from said frequency generator (35);

a phase control device (25) connected to be responsive to the enable signal (340) and to control the phase of the restored sub-carrier from the detection device (23), and

a second phase demodulator (29) arranged to demodulate the output from the first phase demodulator with the restored sub-carrier thereby to reproduce the train of message bits.

5. A receive apparatus according to claim 4, characterized in that the message receiver further comprises, connected in series, a correlator (38) and message integrator (39), the correlator being connected to correlate the phase of the message restored during a transmit sequence with the phase of the integrated message received from the message integrator during preceding transmit sequences.

FIG. 1

FIG. 2

FIG. 3

1

## FIG. 4

## FIG. 6

## FIG. 5